# EUROPEAN PATENT SPECIFICATION

(11) **EP 3 441 182 B1**
(45) Date of publication and mention of the grant of the patent: **03.06.2020**
(21) Application number: 16920372.6
(22) Date of filing: 06.12.2016
(51) Int. Cl.: B26D 7/18, B23Q 1/01, B23K 26/38, B23Q 11/00, B26D 3/08, B26D 5/00, B26D 7/08, B26F 3/08

(54) **PORTAL-SHAPED TEAR PROCESSING DEVICE**
PORTALFÖRMIGE REISSBEARBEITUNGSVORRICHTUNG
DISPOSITIF DE TRAITEMENT DE DÉCHIRURE EN FORME DE PORTIQUE

(30) Priority: 25.10.2016 JP 2016208834
(43) Date of publication of application: 13.02.2019
(73) Proprietor: Nakata Coating Co., Ltd., Yokohama-shi, Kanagawa 240-0041 (JP)
(72) Inventor: MATSUNO Takemi, Yokohama-shi Kanagawa 240-0041 (JP); Oshima Hideo, Yokohama-shi Kanagawa 240-0041 (JP)
(74) Representative: Beyer, Andreas
(86) International application number: PCT/JP2016/086124
(87) International publication number: WO 2018/078891

(56) References cited:
- DE-A1- 19 833 125
- DE-A1-102011 003 009
- DE-A1-102015 204 562
- GB-A- 2 147 026
- IT-A1- TO20 090 546
- JP-A- S5 136 686
- JP-A- H10 286 734
- JP-A- 2001 179 558
- JP-A- 2002 521 214
- JP-B- 3 256 879
- JP-B1- S5 020 298

## Description

### TECHNICAL FIELD

The present invention relates to a portal-shaped tear processing device (or sometimes called as a gate-shaped tear processing device or simply as a tear processing device).

In particular, the present invention relates to a portal-shaped tear processing device which is capable of stably performing high precision tear processing with the order of ±5 µm in a specified residual thickness, due to excellent vibration resistance and dimensional stability, and is capable of easily coping with changes in the type of a workpiece, while stably maintaining the high precision tear processing accuracy.

### BACKGROUND ART

In related art, as a type of machining device, an airbag breaking groove formation device (in some cases, hereinafter referred to as a "tear processing device") for precisely forming an airbag breaking groove which is broken when an airbag is deployed with respect to a vehicle interior member is proposed (for example, refer to Patent Document 1).

That is, as illustrated in Fig. 9, Patent Document 1 discloses an airbag breaking groove formation device 1010 for forming an airbag breaking groove broken when deploying the airbag in a vehicle interior member provided with a hard base material layer and a skin layer for covering an outer surface of the base material layer, the airbag breaking groove formation device 1010 including a support table 1011 on which the vehicle interior member is placed, a primary breaking line forming means 1031 for forming a primary breaking line with respect to the base material layer from a rear surface side of the vehicle interior member on the support table 1011, a secondary breaking line forming means 1033 for forming a secondary breaking line which reaches the skin layer but does not penetrate the skin layer, by causing a processing blade 1013 to enter the vehicle interior member having the primary breaking line formed therein via the primary breaking line, a first processing blade detecting means 1067 for checking presence or absence of the processing blade 1013 at a first detecting position among forming positions of the secondary breaking line on the skin layer, a second processing blade detecting means 1069 for checking the presence or absence of the processing blade 1013 at a second detection position at which a position of the skin layer in a thickness direction is located to be closer to the base material layer side than the first detection position among the formation positions of the secondary breaking line on the skin layer, and a cutting edge position determination unit for determining whether the processing blade 1013 is detected by the second processing blade detecting means 1069 while the processing blade 1013 is not detected by the first processing blade detecting means 1067.

Further, although the device relates to a cutting device for precisely cutting a semiconductor wafer or the like instead of a tear processing device, Patent Document 2 discloses, as illustrated in Fig. 10, a cutting device 2000 which includes a chuck table 2020 having a holding surface 2020a for holding a processing object, a cut feeding means disposed on a device base to move the chuck table 2020 in a cut feeding direction X parallel to the holding surface 2020a, a portal-shaped frame 2050 erected on the device base straddling the cut feeding means and having an opening for allowing movement of the chuck table 2020, a cutting means 2030 fixed to the portal-shaped frame 2050 so as to be movable in a slit feeding direction Z orthogonal to the holding surface 2020a to cut the processing object held by the chuck table 2020 with a cutting blade 2031, and a blade detecting means 2090 for detecting the position of the cutting blade 2031 in the slit feeding direction Z, in which the blade detecting means 2090 includes a support member fixed to a column portion of the portal-shaped frame 2050 erected on the device base and extending to the side of the chuck table 2020, and a blade detection mechanism mounted on a distal end portion of the support member and having a light-emitting portion and a light-receiving portion.

Patent Document 3 discloses a device comprising the technical features identified in the preamble of claim 1.

### CITATION LIST

### PATENT DOCUMENT

Patent Document 1: JP 2009-142916 A (claims etc.)
Patent Document 2: JP 2015-208783 A (claims etc.) Patent Document 3: DE 10 2011 003009 A1 (claims etc.)

### SUMMARY OF THE INVENTION

### PROBLEM TO BE SOLVED BY THE INVENTION

However, since the size of the hexahedral frame on which a controlled movement robot 1063 is placed is small, the airbag breaking groove formation device 1010 described in Patent Document 1 had a problem of difficulty in efficiently coping with the case of changing the type of the workpiece which is a target for forming the airbag breaking groove.

That is, in the airbag breaking groove formation device 1010 described in Patent Document 1, since the size of the hexahedral frame on which the controlled movement robot 1063 is placed is small, it is not possible to sufficiently extend a rail 1064X, and the stroke of the controlled movement robot 1063 becomes short.

Therefore, in a case in which the type of workpiece as a target subjected to tear-processing is changed, for example, from an instrument panel for a right steering wheel to an instrument panel for a left steering wheel, there was a problem in that it was necessary to move the controlled movement robot 1063 for each hexahedral frame and to install the controlled movement robot 1063 on the device base again, and the operation was troublesome.

Besides, there was a problem in that the installation precision had to be strictly checked to maintain the tear processing precision with the order of ±5 µm in the specified residual thickness each time the workpiece was changed.

Further, if the size of the hexahedron frame on which the controlled movement robot 1063 is placed is simply increased in order to lengthen the stroke of the controlled movement robot 1063, since the rigidity of the hexahedral frame is lowered, there was a problem in that not only the hexahedral frame was easily affected by vibration generated from another adjacent device in the factory, vibration caused by running of the forklift, or the like, but also dimensional stability was easily lowered, and it was difficult to stably perform the high precision tear processing.

On the other hand, since the cutting device 2000 described in Patent Document 2 uses the portal-shaped frame 2050 of a comparatively large size, the stroke of an indexing feed movement base 2061 can be increased to some extent, and it is also possible to easily cope with changes in type of workpiece to some extent.

However, from the viewpoint of suppressing distortion due to heat, since the portal-shaped frame 2050 is configured using a hollow cast block or the like, there was a problem in that not only the rigidity was insufficient but also resonance easily occurred.

Therefore, in a case in which the cutting device 2000 described in Patent Document 2 is applied as a tear processing device requiring a precision with the order of ±5 µm in prescribed residual thickness, there was a problem in that not only the cutting device 2000 was easily affected by vibration caused by the external environment, but also the dimensional stability was easily lowered and it was difficult to stably secure the tear processing precision.

Therefore, the inventors have conducted intensive studies, and as a result, have found that, by mounting the tear processing means such as an end mill so as to be movable with respect to a portal-shaped frame having a predetermined internal structure, it is possible to exhibit excellent vibration resistance and dimensional stability, high precision tear processing can be stably applied, and furthermore, it is possible to easily cope with changes in the type of workpiece, thus completing the invention.

That is, the invention provides a portal-shaped processing device which is capable of stably performing high precision tear processing with the order of ±5 µm in a specified residual thickness due to the excellent vibration resistance and dimensional stability, and is capable of easily coping with changes in the type of workpiece, while stably maintaining high precision tear processing accuracy.

### MEANS FOR SOLVING PROBLEM

According to the portal-shaped tear processing device of the invention, provided is a portal-shaped tear processing device which has a portal-shaped frame having two column members erected at predetermined intervals and a single beam member mounted and fixed on upper end surfaces of the two column members, a rail member provided on the beam member, a controlled movement robot capable of reciprocating on the rail member, and a tear processing means provided in the controlled movement robot, in which the column member and the beam member have an outer shell portion, a filler portion enclosed in the outer shell portion, and a hollow portion boring the filling portion along a major axis direction of the column member and the beam member. Thus, it is possible to solve the above-mentioned problem.

That is, since the portal-shaped frame in the portal-shaped tear processing device of the invention has a predetermined internal structure, excellent rigidity can be exhibited.

Further, by having a predetermined internal structure, it is possible to increase the weight to be equal to or greater than a predetermined amount to suppress the influence of vibrations. On the other hand, light weight can be achieved in a predetermined range to suppress occurrence of bending stress due to its own weight.

As a result, excellent vibration resistance and dimensional stability can be exhibited even when the size of the portal-shaped frame is increased.

Therefore, irrespective of the environment in the factory, it is possible to stably perform high precision tear processing with the order of ±5 µm in a prescribed residual thickness.

Also, by increasing the size of the portal-shaped frame, even in a case in which the type of workpiece to be subjected to tear processing is changed, for example, from an instrument panel for a right steering wheel to an instrument panel for a left steering wheel, since there is no need to reinstall the portal-shaped frame, it is possible to easily cope with the change of the workpiece, while stably maintaining the tear processing precision.

Further, in configuring the portal-shaped tear processing device of the invention, the outer shell portion is made of a steel pipe and the filling portion is made of a mortar material.

With such a configuration, since it is possible to easily adjust the weight while improving the rigidity of the column member and the beam member, and to effectively suppress thermal expansion and thermal contraction of the portal-shaped frame as well, the vibration resistance and dimensional stability of the portal-shaped frame can be further effectively improved.

Further, in configuring the portal-shaped tear processing device of the invention, it is preferable that the mortar material is a non-shrink mortar material.

With such a configuration, it is possible to suppress the occurrence of irregular voids between the outer shell portion and the filling portion, and to effectively suppress the lowering in strength or the occurrence of resonance due to such voids.

Further, in configuring the portal-shaped tear processing device of the invention, the column member and the beam member have a plurality of hollow portions.

With such a configuration, it is possible to easily adjust the weight, while further effectively improving the rigidity of the column member and the beam member, and to further effectively improve the vibration resistance and dimensional stability of the portal-shaped frame.

Further, in configuring the portal-shaped tear processing device of the invention, it is preferable that the length of the column member in a major axis direction is set to a value within the range of 90 to 150 cm, and a maximum diameter in a cross-section is set to a value within the range of 28 to 42 cm, and the weight is set to a value within the range of 130 to 230 kg.

With such a configuration, the height of the portal-shaped frame can be made high enough to perform tear processing of various workpieces, without impairing the excellent vibration resistance and dimensional stability.

Further, in the invention, the term "cross-section" means a cross-section taken along a plane orthogonal to the major axis direction of the column member, and the same applies to the beam member.

Further, in configuring the portal-shaped tear processing device of the invention, it is preferable that a length of the beam member in the major axis direction is set to a value within the range of 280 to 350 cm, a maximum diameter in a cross-section is set to a value within the range of 26 to 40 cm, and a weight is set to a value within the range of 350 to 450 kg.

With such a configuration, it is possible to make the lateral width of the portal-shaped frame long enough to perform the tear processing of various workpieces without impairing the excellent vibration resistance and dimensional stability.

Further, in configuring the portal-shaped tear processing device of the invention, a ratio of an area of the filling portion in the cross-section of the column member and the beam member to an area of the hollow portion (an area ratio of the filling portion: an area ratio of the hollow portion) is set to a value within the range of 85 : 15 to 65 : 35.

With such a configuration, it is possible to further effectively improve the vibration resistance and dimensional stability of the portal-shaped frame, by adjusting the weight within a suitable range, while improving the rigidity of the column member and the beam member.

Further, in configuring the portal-shaped tear processing device of the invention, it is preferable to set the weight of the controlled movement robot to a value within the range of 125 to 145 kg.

With such a configuration, it is possible to effectively suppress the occurrence of vibration caused by the movement of the controlled movement robot, while suppressing the influence of vibration caused by the external environment.

Further, in configuring the portal-shaped tear processing device of the invention, it is preferable that the tear processing means is at least one selected from the group consisting of an end mill, a hot melt blade, an ultrasonic cutter, a laser cutter and a knife type cutter blade.

By forming in this way, it is possible to more stably perform high precision tear processing.

### BRIEF DESCRIPTION OF DRAWINGS

Figs. 1(a) to 1(b) are diagrams provided for describing the portal-shaped tear processing device of the invention;
Figs. 2(a) and 2(b) are diagrams provided for describing an internal structure of a portal-shaped frame;
Figs. 3(a) to 3(b) are diagrams provided for describing a vehicle interior member as a workpiece;
Figs. 4(a) to 4(b) are drawings provided for describing an airbag breaking groove;
Figs. 5(a) to 5(b) are diagrams provided for describing a method of measuring the depth of an airbag breaking groove;
Fig. 6 is a diagram provided for describing a method of manufacturing a portal-shaped frame;
Fig. 7 is a diagram provided for describing a controlled movement robot and tear processing means;
Figs. 8(a) to 8(b) are diagrams provided for describing a method for forming an airbag breaking groove by a tear processing means;

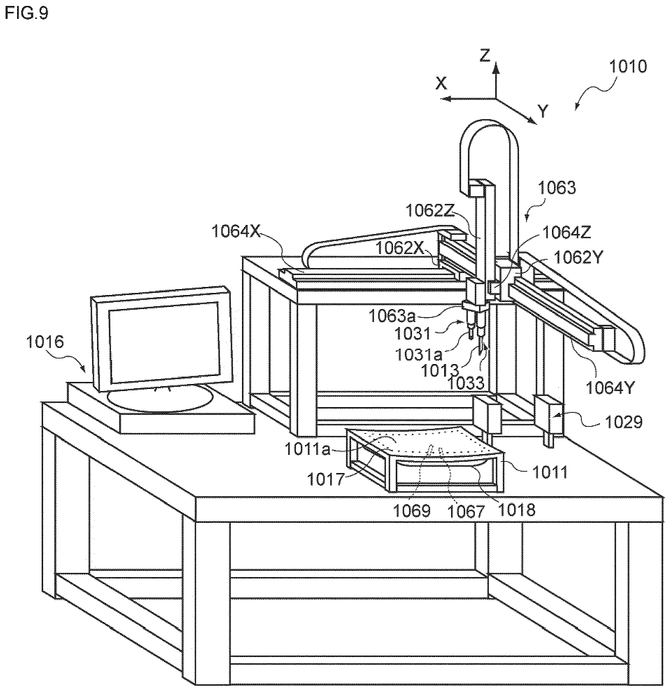

Fig. 9 is a diagram provided for describing a conventional tear processing device; and

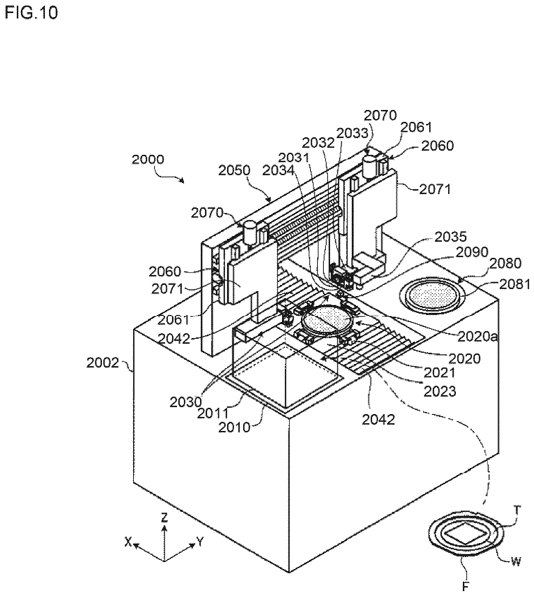

Fig. 10 is a diagram provided for describing a conventional cutting device.

### MODE(S) FOR CARRYING OUT THE INVENTION

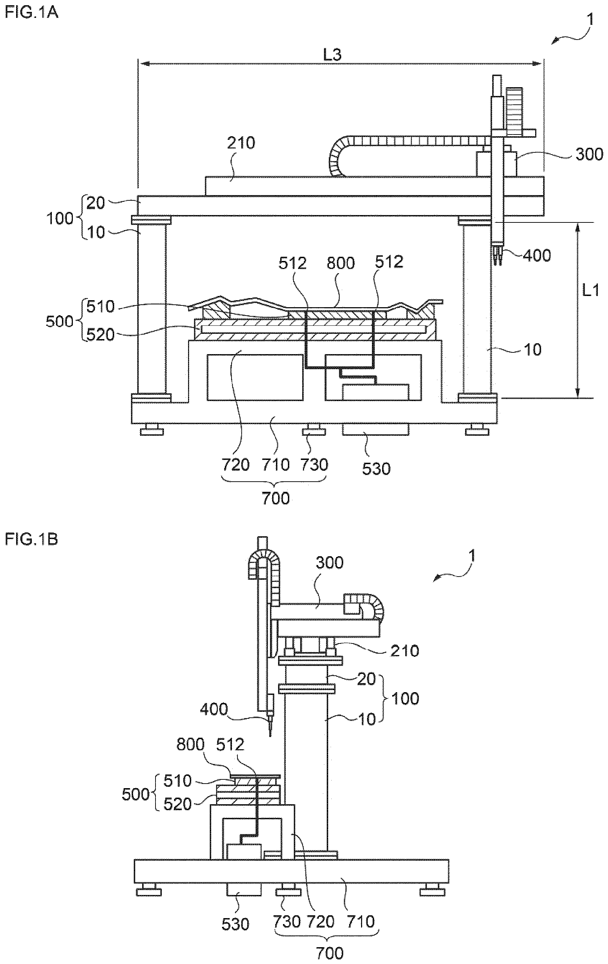

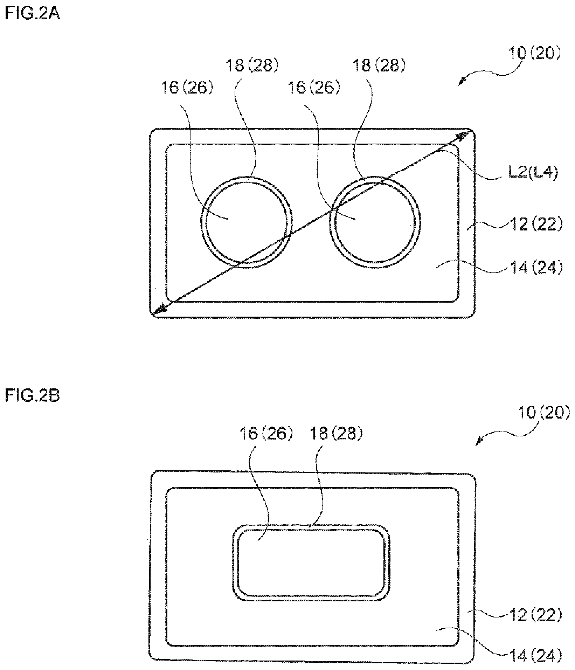

As illustrated in Figs. 1(a) and 1(b), the embodiment of the invention is a portal-shaped tear processing device 1 including: a portal-shaped frame 100 having two column members 10 erected at predetermined intervals and a single beam member 20 mounted and fixed on upper end surfaces of the two column members 10; a rail member 210 provided on the beam member 20; a controlled movement robot 300 capable of reciprocating on the rail member 210; and a tear processing means 400 provided in the controlled movement robot 300. As illustrated in Figs. 2(a) and 2(b), the column member 10 and the beam member 20 include an outer shell portion (12, 22), a filler portion (14, 24) enclosed in the outer shell portion (12, 22), and a hollow portion (16, 26) boring the filling portion (14, 24) along a major axis direction (a direction orthogonal to a sheet surface) of the column member 10 and the beam member 20.

Hereinafter, basically referring to Figs. 1(a) and 1(b), after describing the outline of tear processing using the portal-shaped tear processing device 1 of the invention first, a configuration of the portal-shaped tear processing device 1 will be described in detail.

Fig. 1(a) is a front view of the portal-shaped tear processing device 1, and Fig. 1(b) is a side view of the portal-shaped tear processing device 1.

Further, Figs. 2(a) and 2(b) are cross-sectional views when the column member 10 or the beam member 20 constituting the portal-shaped frame 100 is cut along a plane orthogonal to the major axis direction.

More specifically, Fig. 2(a) is a cross-sectional view of a column member 10 or a beam member 20 having two hollow portions 16 (26) and having a circular cross-sectional shape, and Fig. 2(b) is a cross-sectional view of a column member 10 or a beam member 20 having one hollow portion 16 (26) and having a rectangular cross-section.

### 1. Outline of tear processing

Tear processing using the portal-shaped tear processing device 1 of the invention is performed by a method including the following processes (a) to (e).
(a) A process of placing and fixing a workpiece 800 on a fixing jig 500.
(b) A process of subjecting the workpiece 800 to tear processing using the tear processing means 400.
(c) A process of measuring a depth or a residual thickness of the airbag breaking groove formed by the tear processing using a sensor.
(d) A process of detaching and collecting the workpiece 800 subjected to the tear processing from the fixing jig 500.
(e) A process of replacing the fixing jig 500 in accordance with a change in the type of the workpiece 800.

The outline of each process will be described below.

### (1) Process (a)

The process (a) is a process of placing and fixing the workpiece 800 on the fixing jig 500.

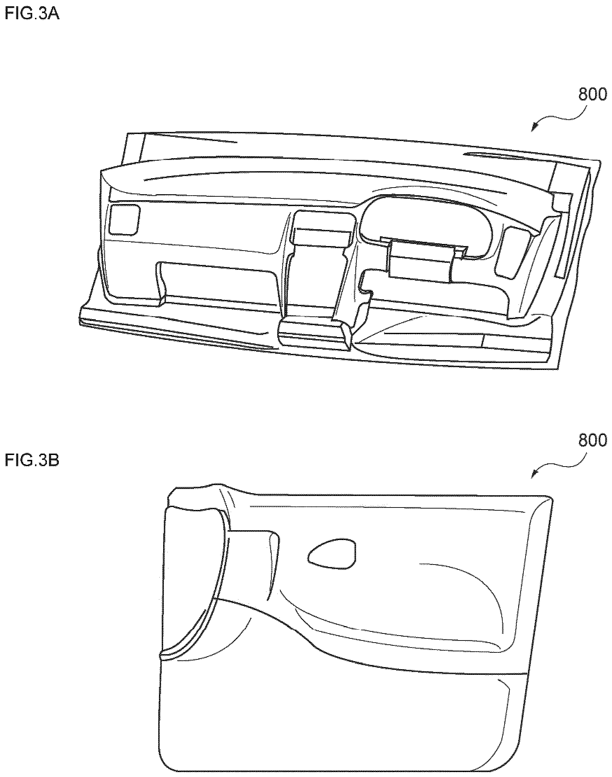

First, the workpiece 800 as a target of tear processing in the invention is a vehicle interior member in which an airbag device is accommodated on an inner side, and specifically, an instrument panel 800 illustrated in Fig. 3(a) or a door panel 800 illustrated in Fig. 3(b) is adopted.

The vehicle interior member is a molded article made of a resin material and may have a single layer structure or may be, for example, a laminated structure made up of a hard base material layer, a foamed layer, and a skin layer.

Fig. 3(a) is a perspective view of the instrument panel 800, and Fig. 3(b) is a perspective view of the door panel 800.

Further, in the airbag breaking groove formed by the tear processing, properties that may not be visually checked from a front surface side of the workpiece 800, that is, a side exposed to the inside of the vehicle, and so-called invisible properties are required.

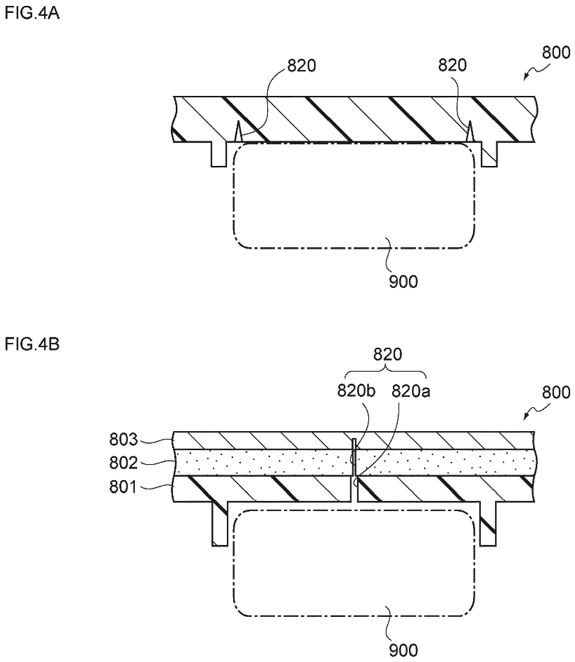

Therefore, as illustrated in Figs. 4(a) and 4(b), the airbag breaking groove 820 needs to be applied to the rear surface side of the workpiece 800 so as not to penetrate the front surface side of the workpiece 800.

Therefore, the workpiece 800 is stably placed and fixed on the fixing jig 500 in a state in which the rear surface side to be subjected to the tear processing is directed to a processing region side, that is, the upper side on which the tear processing means 400 is positioned.

Further, the placement of the workpiece 800 on the fixing jig 500 may be performed by a machine, performed manually, or a combination thereof may be used.

Fixation of the workpiece 800 on the fixing jig 500 can be performed by suction through a plurality of suction holes provided in the fixing jig 500 and by pressing from above by the air cylinder.

Fig. 4(a) is a cross-sectional view of a workpiece 800 of a single layer structure in which the airbag breaking groove 820 is formed by single tear processing, and Fig. 4(b) is a cross-sectional view of a workpiece 800 of a laminated layer in which the airbag breaking groove 820 (820a, 820b) is formed by performing the tear processing twice.

Further, Figs. 4(a) to 4(b) illustrate a base material layer 801, a foamed layer 802, a skin layer 803, and an airbag device 900.

### (2) Process (b)

Next, process (b) is a process of subjecting the workpiece 800 to tear processing using the tear processing means 400.

In this process, the tear processing means 400 such as an end mill located above is three-dimensionally accurately moved with respect to the workpiece 800 placed and fixed on the fixing jig 500 in a state in which the rear surface side is exposed upward, thereby forming an airbag breaking groove.

Further, the movement of the tear processing means 400 is automatically performed by three-dimensionally operating the controlled movement robot 300 by a preset control signal.

### (3) Process (c)

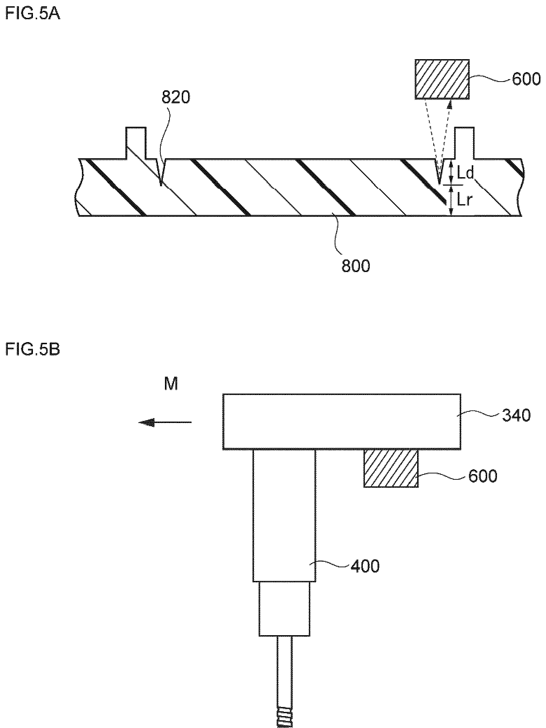

Next, as illustrated in Fig. 5(a), the process (c) is a process of measuring a depth Ld or a residual thickness Lr of the airbag breaking groove 820 formed by the tear processing using the sensor 600.

Precision of tear processing is a factor that directly affects deployment of the airbag, and is a serious matter related to human life.

Therefore, the process (c) is performed from the viewpoint of enhancing the quality assurance of the workpiece 800 subjected to the tear processing.

Specifically, measurement can be performed using the sensor 600 such as a laser beam measurement system. However, in particular, as illustrated in Fig. 5(b), by providing the sensor 600 in the vicinity of the tear processing means 400, the sensor 600 can be moved together with the tear processing means 400, and it is possible to efficiently measure the depth or the like of the freshly formed airbag breaking groove.

Therefore, it is not necessary to perform the process (c) after the termination of process (b), and it is preferable to perform the process (c) at the same time while carrying out the process (b).

It is not necessary to perform the measurement using the sensor 600 over the entire length of the formed airbag breaking groove, and only a predetermined position defined in advance may be inspected.

Fig. 5(a) is a cross-sectional view of the workpiece 800 and the sensor 600, and Fig. 5(b) is a side view illustrating an aspect in which the sensor 600 is provided in the vicinity of the tear processing means 400.

Further, an arrow M in Fig. 5(b) represents a traveling direction of the tear processing means 400.

### (4) Process (d)

Next, the process (d) is a process of detaching and collecting the workpiece 800 subjected to tear processing from the fixing jig 500.

It should be noted that detachment of the workpiece 800 from the fixing jig 500 may be performed by a machine, performed manually, or a combination thereof may be used.

### (5) Process (e)

Next, the process (e) is a process of replacing the fixing jig 500 depending on the change in the type of the workpiece 800.

This process is a process performed only when changing the type of the workpiece 800 to be subjected to tear processing, and a process of detaching the fixing jig 500 fixed to the device base 700 and attaching another fixing jig 500 for different type of workpiece 800.

In this respect, according to the portal-shaped tear processing device 1 of the invention, as will be described in detail below, since it is possible to increase the size of the portal-shaped frame 100 without worrying about vibrations and dimensional changes caused by the external environment, it is also possible to cope with the change in the type of the workpiece 800 basically with respect to any type of workpiece 800, simply by replacing the fixing jig 500.

Therefore, since there is no need to install the portal-shaped frame 100 again with respect to the device base 700, it is possible to easily cope with the change in the type of the workpiece 800, while stably maintaining the tear processing precision.

### 2. Portal-shaped tear processing device

### (1) Portal-shaped frame

The portal-shaped tear processing device 1 of the invention includes a portal-shaped frame 100 which has two column members 10 erected at predetermined intervals, and a single beam member 20 mounted and fixed on the upper end surfaces of the two column members 10.

Hereinafter, the column member and the beam member constituting the portal-shaped frame 100 will be described.

### (1)-1 Column member

As illustrated in Figs. 2(a) and 2(b), the column member 10 of the invention includes an outer shell portion 12, a filler portion 14 enclosed in the outer shell portion 12, and a hollow portion 16 boring the filling portion 14 along the major axis direction of the column member 10.

The reason is that, since the column member 10 includes the outer shell portion 12 and the filling portion 14, it is possible to impart a predetermined weight to the column member 10, while improving the rigidity of the column member 10, and vibration resistance and dimensional stability can be improved.

On the other hand, if the weight of the column member 10 becomes excessively large, bending stress due to its own weight easily occurs, and the vibration resistance and dimensional stability are easily lowered.

In this respect, since the column member 10 of the invention has the hollow portion 16, the value of the cross-sectional secondary moment can be effectively increased, and thus, it is possible to reduce the weight, while maintaining the predetermined rigidity.

Therefore, it is possible to adjust the balance between the rigidity and weight of the column member 10 within a suitable range, and as a result, the excellent vibration resistance and dimensional stability can be obtained.

Further, the outer shell portion 12 is made of a steel pipe and the filling portion 14 is made of a mortar material.

The reason is that, by forming in this way, since it is possible to easily adjust the weight while improving the rigidity of the column member 10 and to effectively suppress thermal expansion and thermal contraction of the column member 10, the vibration resistance and dimensional stability of the portal-shaped frame can be further effectively improved.

That is, the basic rigidity of the column member 10 can be secured by forming the outer shell portion 12 from a steel pipe, and the basic rigidity of the steel pipe can be effectively reinforced by forming the filling portion 14 from a mortar material, and it is possible to impart a predetermined weight to the column member 10.

Further, by forming the filling portion 14 from a mortar material, it is possible to lower the thermal conductivity of the entire column member 10, as a whole, and to suppress the thermal expansion and thermal contraction of the column member 10 as a whole.

Further, by forming the filling portion 14 from a mortar material, as will be described later, by using the cylindrical member (or tubular member) 18 such as a spiral duct when forming the hollow portion 16, only by injecting a mortar material into the steel pipe, filling and then curing the mortar material, the filling portion 14 and the hollow portion 16 can be easily formed.

The type of the steel pipe constituting the outer shell portion 12 is not particularly limited, but it is preferable to use a carbon steel pipe for mechanical structure, a high carbon steel pipe for mechanical structure, a high tension steel pipe for mechanical structure, an alloy steel pipe for mechanical structure, a stainless steel pipe, a carbon steel pipe for general structure.

In addition, the thickness of the steel pipe is preferably set to a value within the range of usually 3 to 8 mm, and more preferably to a value within the range of 4 to 5 mm.

Also, as illustrated in Figs. 2(a) and 2(b), it is preferable that the cross-sectional shape of the steel pipe constituting the outer shell portion 12 is a quadrangle, but it is not particularly limited, and a circle or an ellipse, polygons other than rectangles may be used.

Further, it is preferable that the mortar material constituting the filling portion 14 is a non-shrink mortar material.

This is because, in the case of a non-shrink mortar material, it is possible to suppress an occurrence of irregular voids between the outer shell portion 12 and the filling portion 14, and to effectively suppress a lowering in strength and the occurrence of resonance due to such voids.

That is, since the non-shrink mortar is excellent in fluidity, it can be filled up to every corner irrespective of the shape of the filling portion 14, and since bleeding and sinking do not occur, it is also possible to effectively suppress the occurrence of voids in the course of curing.

The type of the non-shrink mortar material is not particularly limited, but it is preferable to use any one of a cement type, a slag type, a clay type, a synthetic resin type, a water glass type and a special silica type.

Further, as illustrated in Fig. 2(a), the column member 10 has a plurality of hollow portions 16.

The reason is that, by providing a plurality of hollow portions 16, while further effectively improving the rigidity of the column member 10, the weight can be easily adjusted, and the vibration resistance and dimensional stability of the portal-shaped frame can be further effectively improved.

That is, the reason is that, as illustrated in Fig. 2(a), by providing a plurality of hollow portions 16, although depending on the cross-sectional shape and arrangement thereof, since it is possible to effectively increase the value of the cross-sectional secondary moment, the weight reduction can be achieved more effectively, while maintaining the predetermined rigidity, as compared with a case in which the single hollow portion 16 is provided as illustrated in Fig. 2(b).

Further, the number of hollow portions 16 is not particularly limited, but preferably 2 to 5, more preferably 2 to 3, may be provided, depending on the cross-sectional shape of the outer shell portion 12.

Further, as illustrated in Fig. 2(a), the cross-sectional shape of the hollow portion 16 is preferably circular, but it is not particularly limited and may be elliptical or polygonal.

Further, it is preferable to set the length L1 of the column member 10 in the major axis direction illustrated in Fig. 1(a) to a value within the range of 90 to 150 cm.

The reason is that, when the length L1 is a value of below 90 cm, the height of the portal-shaped frame 100 becomes insufficient, and there is a case in which it is difficult to cope with a workpiece 800 with a height. On the other hand, the reason is that, when the length L1 is a value of above 150 cm, the rigidity of the column member 10 is excessively lowered, or bending stress due to its own weight easily occurs, and there is a case in which the vibration resistance and dimensional stability are easily lowered.

Therefore, it is more preferable to set a lower limit value of the length L1 of the column member 10 in the major axis direction to a value of 105 cm or more, further preferably to a value of 115 cm or more.

Further, it is more preferable that an upper limit value of the length L1 of the column member in the major axis direction is set to a value of 135 cm or less, further preferably to a value of 125 cm or less.

Further, it is preferable that the maximum diameter L2 in the cross-section of the column member 10 illustrated in Fig. 2(a) is set to a value within the range of 28 to 42 cm.

The reason is that, if the maximum diameter L2 is a value of below 28 cm, the rigidity of the column member 10 is excessively lowered, or it becomes difficult to secure a sufficient weight, and there is a case in which the vibration resistance and dimensional stability are easily lowered. On the other hand, the reason is that, if the maximum diameter L2 is a value of above 42 cm, the weight of the column member 10 becomes excessively large, bending stress due to its own weight easily occurs, and there is a case in which the vibration resistance and dimensional stability are easily lowered.

Therefore, it is more preferable that a lower limit value of the maximum diameter L2 in the cross-section of the column member 10 is set to a value of 30 cm or more, further preferably to a value of 32 cm or more.

Further, it is more preferable that an upper limit value of the maximum diameter L2 in the cross-section of the column member 10 is a value of 40 cm or less, further preferably to a value of 38 cm or less.

In addition, it is preferable that the weight of the column member 10 is a value within the range of 130 to 230 kg.

The reason is that, if the weight is set to a value of below 130 kg, it is difficult to sufficiently secure the weight of the column member 10, and there is a case in which the vibration resistance is easily lowered. On the other hand, the reason is that, if the weight is set to a value of above 230 kg, the weight of the column member 10 becomes excessively large, and there is a case in which bending stress due to its own weight easily occurs, and the vibration resistance and dimensional stability are easily lowered.

Therefore, it is more preferable that a lower limit value of the weight of the column member 10 is set to a value of 150 kg or more, further preferably to a value of 170 kg or more.

Further, it is more preferable that an upper limit value of the weight of the column member 10 is set to a value of 210 kg or less, further preferably set to a value of 190 kg or less.

Further, a ratio of an area of the filling portion 14 in the cross-section of the column member 10 to an area of the hollow portion 16 (an area ratio of the filling portion: the area ratio of the hollow portion) is set to a value within the range of 85 : 15 to 65 : 35.

The reason is that, when the sum of the area ratio of the filling portion 14 and the area ratio of the hollow portion 16 is taken as 100, if the area ratio of the hollow portion 16 is set to a value of below 15, the weight of the column member 10 becomes excessively large, and there is a case in which bending stress due to its own weight easily occurs, and the vibration resistance and dimensional stability are easily lowered. On the other hand, the reason is that, if the area ratio of the hollow portion 16 is set to a value of above 35, the rigidity of the column member 10 is excessively lowered or it is difficult to sufficiently secure the weight, and there is a case in which the vibration resistance and dimensional stability are easily lowered.

Therefore, it is more preferable that a lower limit value of the area ratio of the hollow portion 16 is set to 18 or more, further preferably to a value of 22 or more.

Further, it is more preferable that an upper limit value of the area ratio of the hollow portion is set to a value of 32 or less, further preferably to a value of 28 or less.

As will be described later, when the cylindrical member 18 such as a spiral duct is used to form the hollow portion 16, the area of the cylindrical member 18 is included in the area of the filling portion 14.

### (1)-2 Beam member

As illustrated in Figs. 2(a) and 2(b), the beam member 20 according to the invention includes an outer shell portion 22, a filler portion 24 included in the outer shell portion 22, and a hollow portion 26 boring the filling portion 24 along the major axis direction of the beam member 20.

Such a beam member 20 can be configured basically in the same manner as the above-described column member 10 except for the size.

Therefore, only differences of the beam member 20 from the column member 10 will be described.

First, it is preferable that a length L3 of the beam member 20 in the major axis direction illustrated in Fig. 1(a) is set to a value within the range of 280 to 350 cm.

The reason is that, if the length L3 is a value of below 280 cm, a lateral width of the portal-shaped frame 100 becomes insufficient, and there is a case in which it is difficult to cope with the workpiece 800 with a lateral width. On the other hand, the reason is that, if the length L3 is a value of above 350 cm, the rigidity of the beam member 20 is excessively lowered, or bending stress due to its own weight easily occurs, and there is a case in which the vibration resistance and dimensional stability are easily lowered.

Therefore, it is more preferable that a lower limit value of the length L3 of the beam member 20 in the major axis direction is set to a value of 295 cm or more, further preferably to a value of 310 cm or more.

Further, it is more preferable that an upper limit value of the length L3 of the beam member 20 in the major axis direction is set to a value of 335 cm or less, further preferably to a value of 320 cm or less.

Further, it is preferable that a maximum diameter L4 in the cross-section of the beam member 20 illustrated in Fig. 2(a) is a value within the range of 26 to 40 cm.

The reason is that, if the maximum diameter L4 is a value of below 26 cm, the rigidity of the beam member 20 is excessively lowered, or it becomes difficult to secure a sufficient weight, and there is a case in which the vibration resistance and dimensional stability are easily lowered. On the other hand, the reason is that, if the maximum diameter L4 is a value of above 40 cm, the weight of the beam member 20 becomes excessively large, and there is a case in which bending stress due to its own weight easily occurs, and the vibration resistance and dimensional stability are easily lowered.

Therefore, it is more preferable that a lower limit value of the maximum diameter L4 in the cross-section of the beam member 20 is set to a value of 28 cm or more, further preferably to a value of 32 cm or more.

Further, it is more preferable that an upper limit value of the maximum diameter L4 in the cross-section of the beam member 20 is set to a value of 38 cm or less, further preferably to a value of 36 cm or less.

Further, it is preferable that the weight of the beam member 20 is set to a value within the range of 350 to 450 kg.

The reason is that, if the weight is a value of below 350 kg, it is difficult to sufficiently secure the weight of the beam member 20, and there is a case in which the vibration resistance is easily lowered. On the other hand, the reason is that, if the weight is a value of above 450 kg, the weight of the beam member 20 becomes excessively large, and there is a case in which bending stress due to its own weight easily occurs, and the vibration resistance and dimensional stability are easily lowered.

Therefore, it is more preferable that a lower limit value of the weight of the beam member 20 is set to a value of 370 kg or more, further preferably to a value of 390 kg or more.

Further, it is more preferable that an upper limit value of the weight of the beam member 20 is set to a value of 430 kg or less, and further preferably to a value of 410 kg or less.

In addition, in Fig. 1(a), a right end of the beam member 20 extends to the right side of the column member 10. This is for securing the retraction position for retracting and stopping the controlled movement robot 300 outside the processing region, when the worker enters the processing region, from the viewpoint of ensuring safety.

With such a configuration, while preventing occurrence of the deflection of the beam member 20 due to the excessively long distance between the two column members 10, it is possible to reliably retract and stop the controlled movement robot 300 outside the processing region.

### (1)-3 Manufacturing method

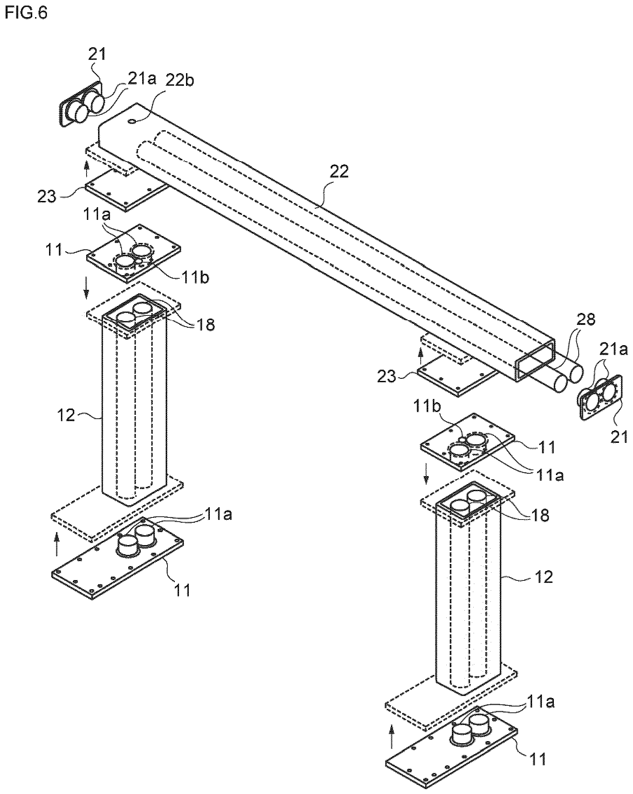

A method of manufacturing the portal-shaped frame 100 is not particularly limited, but in particular, when a steel pipe is used as the outer shell portion 12 and a mortar material is used as the filling portion 14, as illustrated in Fig. 6, the portal-shaped frame 100 can be manufactured by the method including the following processes (A) to (F).
(A) A process of joining the plate-like lid member 11 to the outer shell portion 12 to obtain a framework portion of the column member 10 such that a fixing collar 11a provided on an inner surface side of the plate-like lid member 11 is inserted into the cylinder of the cylindrical member 18 from both sides of the outer shell portion 12 in a state in which the cylindrical member 18 is loosely inserted into the outer shell portion 12.
(B) A process of injecting the filler material from an injection hole 11b penetrating the plate-like lid member 11 as the upper end surface of the framework portion of the column member 10, filling and curing the filler material to a part other than a region (hereinafter, in some cases, the part is referred to as a "scheduled part") occupied by the cylindrical member 18 inside the outer shell portion 12 in the framework portion of the column member 10, and then sealing the injection hole 11b to obtain the column member 10.
(C) A process of obtaining the two column members 10 by the same process as the processes (A) to (B).
(D) after obtaining the framework portion of the beam member 20 by the same process as in the process (A), a process of providing a mounting plate-like member 23 for fixing the framework portion of the beam member 20 to the two column members 10 at two positions on the same side on the outer surface of the beam member 20.
(E) A process of causing the filler material to be injected from an injection hole 22b penetrating the outer shell portion 22 of the framework portion of the beam member 20 to fill and cure the filler material in a portion to be filled of the framework portion of the beam member 20, and then sealing the injection hole 22b to obtain a beam member 20.
(F) A process of joining and fixing the surface of the plate-like lid member 11 as the upper end surface of the two column members 10 and the surfaces of the two mounting plate-like members 23 provided on the beam member 20 to obtain the portal-shaped frame 100.

That is, in the processes (A) to (E), when the two column members 10 having excellent rigidity and one beam member 20 are prepared in advance and then assembled in the process (F), as compared to the case of filling the filler material after the assembly, it is possible to suppress occurrence of bending after assembling with high precision and to more effectively improve the dimensional stability. Fig. 6 is a perspective view of the portal-shaped frame 100 in the manufacturing process.

Further, the cylindrical members (18, 28) are not particularly limited as long as they are in the form of a pipe, but it is preferable to use a spiral duct used as an exhaust duct or the like.

The reason is that, in the case of a spiral duct, since it is formed by superimposing both ends of a band steel on a haze fold while spirally winding the band steel, the filler material can be stably injected along the spiral strip formed on the outer peripheral surface of the spiral duct.

Therefore, it is possible to effectively suppress occurrence of voids due to non-uniformity of injecting or occurrence of bubbles caused thereby in the obtained filler portion.

Further, in the case of a spiral duct, since it is usually formed of a thin steel material of 1 mm or less, even when a filler material such as a non-shrink mortar material is slightly expanded by curing, it easily deforms to be able to efficiently relax the internal stress of the column member 10 or the beam member 20.

The method of joining the plate-like lid members (11, 21) to the outer shell portions (12, 22) and the method of joining the mounting plate-like member 23 to the outer shell portion 22 are not particularly limited as long as a joining method of obtaining the sufficient fixing strength is obtained and preventing the filler material filled therein from leaking to the outside is used. However, when the outer shell portions (12, 22), the plate-like lid members (11, 21) and the mounting plate-like member 23 are made of a steel material, it is preferable to join them by welding.

Further, the method of joining the surface of the plate-like lid member 11 and the surface of the mounting plate-like member 23 is also not particularly limited. However, when both the plate-like lid member 11 and the mounting plate-like member 23 are made of steel, it is preferable that the joint surfaces are precisely planarized with a portal-shaped milling cutter and then fixed with a bolt and a nut via a plurality of fixing holes provided at the edge portions of both members.

Further, the diameters of the injection hole 22b and the injection hole 11b are preferably set to a value within the range of usually 25 to 35 mm, and are preferably bored by the drill.

The curing time of the filler material is usually preferably set to a value within the range of 12 to 20 hours.

### (2) Rail member

As illustrated in Figs. 1(a) and 1(b), the portal-shaped tear processing device 1 of the invention has a rail member 210 provided on the beam member 20 of the portal-shaped frame 100 described above.

The rail member 210 is a member for attaching a controlled movement robot 300 to be described below to the portal-shaped frame 100 so as to be capable of reciprocating in a direction along the beam member 20.

Although the aspect of the rail member 210 is not particularly limited, as illustrated in Figs. 1(a) and 1(b), in general, an aspect in which the rail member 210 extends in parallel to the major axis direction of the beam member 20 with respect to the upper surface of the beam member 20 within the range that falls inside the beam member 20, and the rail member 210 stably engages the controlled movement robot 300 is preferable.

In addition, although the material of the rail member 210 is not particularly limited, it is preferable to use, for example, a rolled steel material for general structure from the viewpoints of processability, the dimensional stability and the like.

### (3) Controlled movement robot

The portal-shaped tear processing device 1 of the invention includes a controlled movement robot 300 capable of reciprocating on the above-described rail member 210.

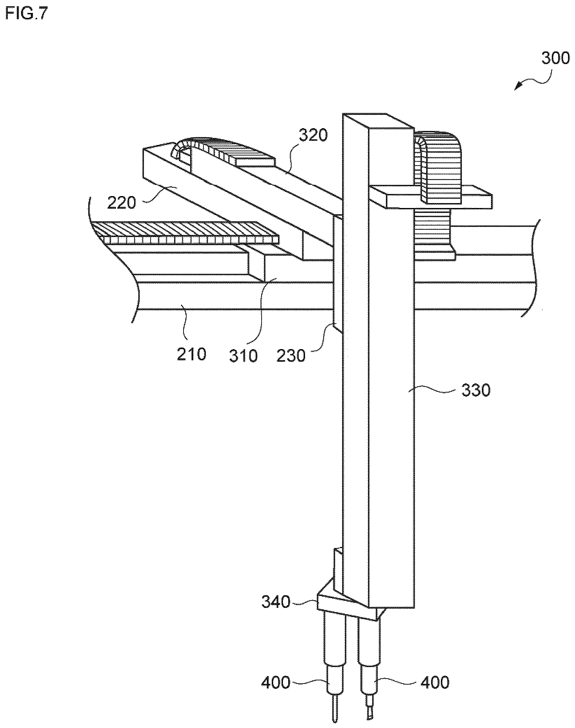

As illustrated in Fig. 7, when the rail member 210 is set as an X-axis direction rail member 210, the controlled movement robot 300 is preferably configured to include an X-axis direction movement base 310 mounted to be able to reciprocate with respect to the X-axis direction rail member 210, a Y-axis direction rail member 220 fixed to the X-axis direction movement base 310, a Y-axis direction movement base 320 mounted to be able to reciprocate with respect to the Y-axis direction rail member 220, a Z-axis direction rail member 230 fixed to the Y-axis direction movement base 320, a Z-axis direction movement base 330 mounted to be able to reciprocate with respect to the Z-axis direction rail member 230, and a tear processing means fixing portion 340 provided at the lower end of the Z-axis direction movement base 330.

With such a configuration, since the X-axis to Z-axis direction movement bases (310, 320, 330) can be made independently to reciprocate in the X-axis to Z-axis direction rail members (210, 220, 230) by a control signal from a movement control unit (not illustrated), it is possible to control the spatial position of the distal end portion of the tear processing means 400 with high precision and finally to perform high precision tear processing.

Further, Fig. 7 is a perspective view of the controlled movement robot 300 in a state in which the tear processing means 400 is attached.

Further, it is preferable to set the weight of the controlled movement robot 300 to a value within the range of 125 to 145 kg.

The reason is that, if the weight of the controlled movement robot 300 reaches a value of below 125 kg, there is a case in which the controlled movement robot 300 itself may be excessively vibrated. On the other hand, the reason is that, if the weight of the controlled movement robot 300 is a value of above 145 kg, bending stress due to the weight of the controlled movement robot 300 easily occurs in the column member 10 or the beam member 20, and there is a case in which the vibration resistance and dimensional stability may be easily lowered.

Therefore, it is more preferable that a lower limit value of the weight of the controlled movement robot 300 is set to a value of 130 kg or more, further preferably to a value of 134 kg or more.

Further, it is more preferable that an upper limit value of the controlled movement robot 300 is set to a value of 140 kg or less, and further preferably set to a value of 138 kg or less.

In the portal-shaped tear processing device 1 of the invention, the size of the portal-shaped frame 100 can be enlarged. Therefore, the distance between the predetermined tear processing position on the rail member 210 reciprocating each time the controlled movement robot 300 tears each workpiece 800 and the retraction position becomes longer.

Therefore, in the portal-shaped tear processing device 1 of the invention, from the viewpoint of maintaining manufacturing efficiency, it is required to set the movement speed of the controlled movement robot 300 to be higher than the conventional speed of 1 m/sec.

Therefore, although the tear processing conditions easily causes vibration with sudden acceleration and sudden deceleration of the controlled movement robot 300, since the portal-shaped tear processing device 1 of the invention should have the excellent vibration resistance, it is possible to effectively suppress the vibration.

### (4) Tear processing means

The portal-shaped tear processing device 1 of the invention includes tear processing means 400 capable of being movement-controlled by the above-described controlled movement robot 300.

As long as the tear processing means 400 is a processing means capable of forming a breaking groove so as not to penetrate the front surface side from the rear surface side to the front surface side with respect to the vehicle interior member as the workpiece 800, it is not particularly limited, but it is preferably at least one selected from the group consisting of an end mill, a hot melt blade, an ultrasonic cutter, a laser cutter and a knife type cutter blade.

The reason is that if the tear processing means 400 is used, high-precision tear processing can be performed more stably.

The aspect of installing the tear processing means 400 to the controlled movement robot 300 is not particularly limited, but as illustrated in Fig. 7, it is preferable that the tear processing means 400 is fixed to the lower end of the tear processing means fixing portion 340 of the controlled movement robot 300.

Further, as illustrated in Fig. 7, it is preferable to install two types of tear processing means 400 for the controlled movement robot 300.

The reason is that, by providing the two types of tear processing means 400, particularly as illustrated in Fig. 4(b), the first airbag breaking groove 820a and the second airbag breaking groove 820b can be efficiently formed for the workpiece 800 of the laminated structure.

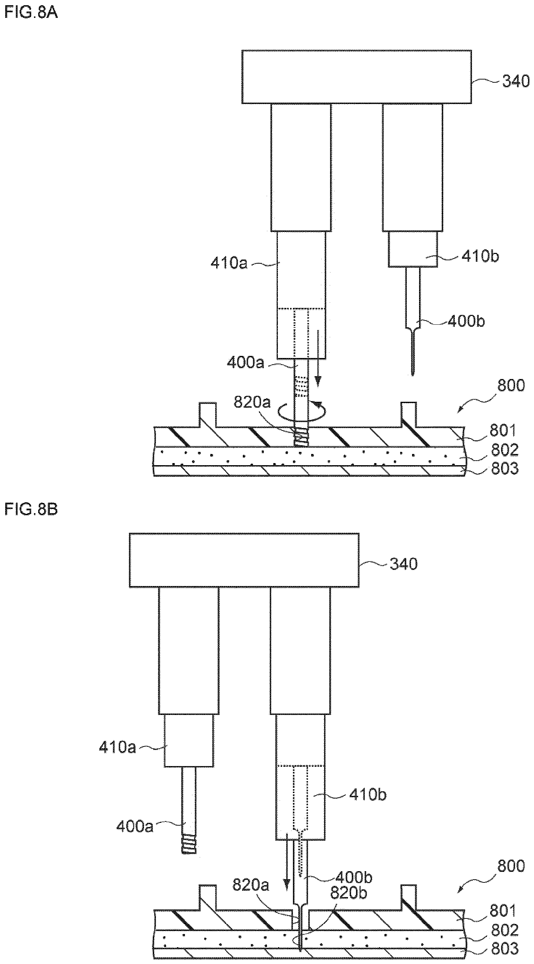

Hereinafter, as an example, as illustrated in Fig. 8, a case in which an end mill is used as the first tear processing means 400a and a knife type cutter blade is used as the second tear processing means 400b will be described.

First, as illustrated in Fig. 8(a), the first cylinder arm 410a is extended while the second cylinder arm 410b is retracted so that only the first tear processing means 400a is subjected to tear processing, and then, a first airbag breaking groove 820a having a relatively wide width is formed with respect to the entire thickness of the base material layer 801 in the workpiece 800.

Next, as illustrated in Fig. 8(b), the first cylinder arm 410a is retracted while the second cylinder arm 410b is extended so that only the second tear processing means 400b is subjected to tear processing, and then, a second airbag breaking groove 820b having a relatively narrow width from the foamed layer 802 in the formed first airbag breaking groove 820a to the mid portion of the skin layer 803 is formed.

Further, by controlling the direction of the tear processing means fixing portion 340 so that the first tear processing means 400a and the second tear processing means 400b are parallel to the predetermined line on which the airbag breaking groove is formed, it is also possible to form the first airbag breaking groove 820a and the second airbag breaking groove 820b not separately but continuously.

Fig. 8(a) is a front view illustrating a state of the tear processing performed by the first tear processing means 400a, and Fig. 8(b) is a front view illustrating a state of the tear processing performed by the second tear processing means 400b.

### (5) Fixing jig

The portal-shaped tear processing device 1 according to the invention is provided with a fixing jig 500 for placing and fixing the workpiece 800 in a processing region below the tear processing means 400 when applying the tear processing to a vehicle interior member as the workpiece 800.

The reason is that, when applying the high precision tear processing, it is necessary to stably place and fix a vehicle interior member as a three-dimensionally formed workpiece 800 in a state in which the rear surface side to be subjected to tear processing is on the side of the processing region, that is, in the upward direction.

Therefore, the surface shape of the placing portion 510 of the fixing jig 500 illustrated in Figs. 1(a) and 1(b) is configured in a three-dimensional shape matching with the surface shape of the front surface side of the workpiece 800.

Although the constituent material of the fixing jig 500 is not particularly limited, it is preferable to use a rolled steel material for general structure as a foundation portion 520 from the viewpoint of improving the installation stability, and it is preferable to use aluminum or engineering plastics as the placing portion 510, from the viewpoint of weight reduction and processability.

It is also preferable to provide a plurality of suction holes 512 which are open on the surface of the placing portion 510 of the fixing jig 500.

The reason is that, by suctioning from the rear surface side of the fixing jig 500 via the suction hole 512 using the suction device 530 such as a vacuum pump, the workpiece 800 placed on the placing portion 510 can be stably fixed to the placing portion 510.

Further, the fixing jig 500 needs to be changed for each type of the workpiece 800, but since the fixing jig 500 is fixed to the device base 700 separately from the portal-shaped frame 100, even if the fixing jig 500 is changed, the installation precision of the portal-shaped frame 100 is not affected.

### (6) Sensor

The portal-shaped tear processing device 1 of the invention preferably includes a sensor for measuring the depth or the remaining thickness of the airbag breaking groove formed in the workpiece 800.

The reason is that by performing the tear processing on each workpiece 800 and measuring the depth and the like of the airbag breaking groove at the same time, it is possible to maximize the quality assurance of the obtained workpiece 800 subject to tear processing.

The type of such a sensor is not particularly limited, but for example, besides a laser beam measuring system as illustrated in Fig. 5(a), an infrared measuring system or an eddy current system can be adopted.

In particular, by installing the laser beam measuring system in the vicinity of the tear processing means 400, more specifically, with respect to the tear processing means fixing portion 340 as illustrated in Fig. 5(b), the sensor 600 can be moved with the tear processing means 400, and it is possible to efficiently measure the depth and the like of the freshly formed airbag breaking groove.

### (7) Device base

Further, as illustrated in Figs. 1(a) and 1(b), the portal-shaped tear processing device 1 of the invention may be preferably provided with a device base 700 for installing the portal-shaped frame 100, the fixing jig 500, and the like.

The reason is that, by providing the device base 700, even when the floor of the installation place is not horizontal, the portal-shaped tear processing device 1 can be horizontally installed by finely adjusting the plurality of adjustment screw members 730.

In addition, since the device base 700 is provided with a jig table 720 on the foundation portion 710, the installation and removal work of the fixing jig 500 with respect to the device base 700 is facilitated, and the installation and removal work of the workpiece 800 on the fixing jig 500 is also facilitated.

It is preferable that the device base 700 has a frame structure as illustrated in Figs. 1(a) to 1(b).

Although such a frame structure may have the same internal structure as that of the portal-shaped frame 100, it has been confirmed from experiences that even a hollow steel pipe can also maintain the excellent vibration resistance and dimensional stability.

### INDUSTRIAL APPLICABILITY

According to the portal-shaped tear processing device of the invention, since the tear processing means such as the end mill is movably mounted on the portal-shaped frame having the predetermined internal structure, the excellent vibration resistance and dimensional stability can be exhibited, and it is possible to stably perform high precision tear processing and to easily cope with changes in the type of workpiece.

Therefore, the portal-shaped tear processing device of the invention is expected to significantly contribute to a quality improvement and efficiency of the airbag breaking groove forming process in which a precision with the order of ±5 µm in the specified residual thickness is required and the change in type of workpiece is frequently performed.

### EXPLANATIONS OF LETTERS OR NUMERALS

- 1: PORTAL-SHAPED TEAR PROCESSING DEVICE
- 10: COLUMN MEMBER
- 11: PLATE-LIKE LID MEMBER OF COLUMN MEMBER
- 11a: FIXING COLLAR
- 11b: INJECTION HOLE
- 12: OUTER SHELL PORTION OF COLUMN MEMBER
- 14: FILLER PORTION OF COLUMN MEMBER
- 16: HOLLOW PORTION OF COLUMN MEMBER
- 18: CYLINDRICAL MEMBER OF COLUMN MEMBER
- 20: BEAM MEMBER
- 21: PLATE-LIKE LID MEMBER OF BEAM MEMBER
- 22: OUTER SHELL PORTION OF BEAM MEMBER
- 22b: INJECTION HOLE
- 23: MOUNTING PLATE-LIKE MEMBER
- 24: FILLER PORTION OF BEAM MEMBER
- 26: HOLLOW PORTION OF BEAM MEMBER
- 28: CYLINDRICAL MEMBER OF BEAM MEMBER
- 100: PORTAL-SHAPED FRAME
- 210: X-AXIS DIRECTION RAIL MEMBER
- 220: Y-AXIS DIRECTION RAIL MEMBER
- 230: Z-AXIS DIRECTION RAIL MEMBER
- 300: CONTROLLED MOVEMENT ROBOT
- 310: X-AXIS DIRECTION MOVEMENT BASE
- 320: Y-AXIS DIRECTION MOVEMENT BASE
- 330: Z-AXIS DIRECTION MOVEMENT BASE
- 340: TEAR PROCESSING MEANS FIXING PORTION
- 400: TEAR PROCESSING MEANS
- 400a: FIRST TEAR PROCESSING MEANS
- 400b: SECOND TEAR PROCESSING MEANS
- 410a: FIRST CYLINDER ARM
- 410b: SECOND CYLINDER ARM
- 500: FIXING JIG
- 510: PLACING PORTION
- 520: FOUNDATION PORTION OF FIXING JIG
- 512: SUCTION HOLE
- 530: SUCTION DEVICE
- 600: SENSOR
- 700: DEVICE BASE
- 710: FOUNDATION PORTION OF DEVICE BASE
- 720: JIG TABLE
- 730: ADJUSTMENT SCREW MEMBER
- 800: WORKPIECE
- 801: BASE MATERIAL LAYER
- 802: FOAMED LAYER
- 803: SKIN LAYER
- 820: AIRBAG BREAKING GROOVE
- 820a: FIRST AIRBAG BREAKING GROOVE
- 820b: SECOND AIRBAG BREAKING GROOVE
- 900: AIRBAG DEVICE

## Claims

1. A portal-shaped tear processing device (1) comprising:
a portal-shaped frame (100) having two column members (10) erected at predetermined intervals and a single beam member (20) mounted and fixed on upper end surfaces of the two column members (10);
a rail member (210) provided on the beam member (20);
a controlled movement robot (300) capable of reciprocating on the rail member (210); and
a tear processing means (400) provided in the controlled movement robot (300),
**characterized in that** the column member (10) and the beam member (20) have an outer shell portion (12, 22), a filler portion (14, 24) enclosed in the outer shell portion (12, 22), and a hollow portion (16, 26) boring the filling portion (14, 24) along a major axis direction of the column member (10) and the beam member (20),
wherein the column member (10) and the beam member (20) have a plurality of hollow portions (16, 26),
wherein the outer shell portion (12, 22) is made of a steel pipe and the filling portion (14) is made of a mortar material,
and wherein a ratio of an area of the filling portion (14) to an area of the hollow portion (16) in the cross-section of the column member (10) and the beam member (20) is set to a value within the range of 85 : 15 to 65 : 35.

2. The portal-shaped tear processing device (1) according to claim 1, wherein the mortar material is a non-shrink mortar material.

3. The portal-shaped tear processing device (1) according to claim 1 or 2, wherein a length of the column member (10) in the major axis direction is set to a value within the range of 90 to 150 cm, a maximum diameter in a cross-section is set to a value within the range of 28 to 42 cm, and a weight is set to a value within the range of 130 to 230 kg.

4. The portal-shaped tear processing device (1) according to anyone of claims 1 to 3, wherein a length of the beam member (20) in the major axis direction is set to a value within the range of 280 to 350 cm, a maximum diameter in a cross-section is set to a value within the range of 26 to 40 cm, and a weight is set to a value within the range of 350 to 450 kg.

5. The portal-shaped tear processing device (1) according to anyone of claims 1 to 4, wherein a weight of the controlled movement robot (300) is set to a value within the range of 125 to 145 kg.

6. The portal-shaped tear processing device (1) according to anyone of claims 1 to 5, wherein the tear processing means (400) is at least one selected from the group consisting of an end mill, a hot melt blade, an ultrasonic cutter, a laser cutter and a knife type cutter blade.

## Patentansprüche

1. Portalförmige Reißbearbeitungsvorrichtung (1), umfassend:
einen portalförmigen Rahmen (100) mit zwei Säulenelementen (10), die in vorgegebenen Abständen aufrecht stehen, und einem einzelnen Balkenelement (20), das an oberen Stirnflächen der zwei Säulenelemente (10) montiert und fixiert ist;
ein Schienenelement (210), das auf dem Balkenelement (20) bereitgestellt ist;
einen gesteuerten beweglichen Roboter (300), der in der Lage ist, sich auf dem Schienenelement (210) hin und her zu bewegen; und
eine Reißbearbeitungseinrichtung (400), die in dem gesteuerten Roboter (300) bereitgestellt ist, **dadurch gekennzeichnet, dass**
das Säulenelement (10) und das Balkenelement (20) einen Außenhüllenabschnitt (12, 22), einen Füllmasseabschnitt (14, 24), der von dem Außenhüllenabschnitt (12, 22) umschlossen ist, und einen entlang einer Hauptachsenrichtung des Säulenelements (10) und des Balkenelements (20) durch den Füllmasseabschnitt (14, 24) hindurch verlaufenden hohlen Abschnitt (16, 26) aufweisen,
wobei das Säulenelement (10) und das Balkenelement (20) mehrere hohle Abschnitte (16, 26) aufweisen,
wobei der Außenhüllenabschnitt (12, 22) von einem Stahlrohr gebildet wird und der Füllmasseabschnitt (14) aus einem Mörtelmaterial gebildet ist,
und wobei ein Verhältnis einer Fläche des Füllmasseabschnitts (14) zu einer Fläche des hohlen Abschnitts (16) im Querschnitt des Säulenelements (10) und des Balkenelements (20) auf einen Wert innerhalb des Bereichs von 85 : 15 bis 65 : 35 eingestellt ist.

2. Portalförmige Reißbearbeitungsvorrichtung (1) nach Anspruch 1, wobei das Mörtelmaterial ein nicht schrumpfendes Mörtelmaterial ist.

3. Portalförmige Reißbearbeitungsvorrichtung (1) nach Anspruch 1 oder 2, wobei eine Länge des Säulenelements (10) in der Hauptachsenrichtung auf einen Wert innerhalb des Bereichs von 90 bis 150 cm eingestellt ist, ein maximaler Durchmesser in einem Querschnitt auf einen Wert innerhalb des Bereichs von 28 bis 42 cm eingestellt ist und ein Gewicht auf einen Wert innerhalb des Bereichs von 130 bis 230 kg eingestellt ist.

4. Portalförmige Reißbearbeitungsvorrichtung (1) nach irgendeinem der Ansprüche 1 bis 3, wobei eine Länge des Balkenelements (20) in der Hauptachsenrichtung auf einen Wert innerhalb des Bereichs von 280 bis 350 cm eingestellt ist, ein maximaler Durchmesser in einem Querschnitt auf einen Wert innerhalb des Bereichs von 26 bis 40 cm eingestellt ist und ein Gewicht auf einen Wert innerhalb des Bereichs von 350 bis 450 kg eingestellt ist.

5. Portalförmige Reißbearbeitungsvorrichtung (1) nach einem der Ansprüche 1 bis 4, wobei ein Gewicht des gesteuerten beweglichen Roboters (300) auf einen Wert innerhalb des Bereichs von 125 bis 145 kg eingestellt ist.

6. Portalförmige Reißbearbeitungsvorrichtung (1) nach einem der Ansprüche 1 bis 5, wobei die Reißbearbeitungseinrichtung (400) mindestens eine ist, die ausgewählt ist aus der Gruppe bestehend aus einer Schaftfräse, einer Schmelzschneidklinge, einem Ultraschallschneider, einem Laserschneider und einer messerartigen Schneidklinge.

## Revendications

1. Dispositif de traitement de déchirure en forme de portique (1) comprenant :
un cadre en forme de portique (100) présentant deux éléments de colonne (10) érigés à des intervalles prédéterminés et un seul élément de poutre (20) monté et
fixé sur des surfaces d'extrémité supérieure des deux éléments de colonne (10) ;
un élément de rail (210) prévu sur l'élément de poutre (20) ;
un robot à mouvement commandé (300) apte à se déplacer en va-et-vient sur l'élément de rail (210) ; et
un moyen de traitement de déchirure (400) prévu dans le robot à mouvement commandé (300),
**caractérisé en ce que**
l'élément de colonne (10) et l'élément de poutre (20) présentent une portion de coque extérieure (12, 22),
une portion de remplissage (14, 24) enfermée dans la portion de coque extérieure (12, 22),
et une portion creuse (16, 26) forant la portion de remplissage (14, 24) le long d'une direction d'axe majeure de l'élément de colonne (10) et l'élément de poutre (20),
dans lequel l'élément de colonne (10) et l'élément de poutre (20) présentent une pluralité de portions creuses (16, 26),
dans lequel la portion de coque extérieure (12, 22) est réalisée en un tuyau d'acier et la portion de remplissage (14) est réalisée en un matériau de mortier,
et dans lequel un rapport entre une zone de la portion de remplissage (14) et une zone de la portion creuse (16) dans la section transversale de l'élément de colonne (10) et l'élément de poutre (20) est réglé à une valeur dans la plage de 85:15 à 65:35.

2. Dispositif de traitement de déchirure en forme de portique (1) selon la revendication 1, dans lequel le matériau de mortier est un matériau de mortier non-rétrécissant.

3. Dispositif de traitement de déchirure en forme de portique (1) selon la revendication 1 ou 2, dans lequel une longueur de l'élément de colonne (10) dans la direction d'axe majeur est réglée à une valeur dans la plage de 90 à 150 cm, un diamètre maximum dans une section transversale est réglé à une valeur dans la plage de 28 à 42 cm, et un poids est réglé à une valeur dans la plage de 130 à 230 kg.

4. Dispositif de traitement de déchirure en forme de portique (1) selon l'une quelconque des revendications 1 à 3, dans lequel une longueur de l'élément de poutre (20) dans la direction d'axe majeur est réglée à une valeur dans la plage de 280 à 350 cm, un diamètre maximum dans une section transversale est réglé à une valeur dans la plage de 26 à 40 cm, et un poids est réglé à une valeur dans la plage de 350 à 450 kg.

5. Dispositif de traitement de déchirure en forme de portique (1) selon l'une quelconque des revendications 1 à 4, dans lequel un poids du robot à mouvement commandé (300) est réglé à une valeur dans la plage de 125 à 145 kg.

6. Dispositif de traitement de déchirure en forme de portique (1) selon l'une quelconque des revendications 1 à 5, dans lequel le moyen de traitement de déchirure (400) est au moins un sélectionné à partir du groupe constitué d'une fraise à queue, une lame thermofusible, un dispositif de coupe à ultrasons, un dispositif de coupe laser et une lame de coupe de type couteau.
